(19) Europäisches Patentamt / European Patent Office / Office européen des brevets

(11) **EP 2 936 998 B1**

(12) **EUROPEAN PATENT SPECIFICATION**

(45) Date of publication and mention
of the grant of the patent:
**13.12.2017 Bulletin 2017/50**

(51) Int Cl.:
*A23L 7/10* (2016.01)      *A23L 3/3562* (2006.01)
*A21D 13/04* (2017.01)

(21) Application number: **13868344.6**

(22) Date of filing: **24.12.2013**

(86) International application number:
**PCT/KR2013/012053**

(87) International publication number:
**WO 2014/104691 (03.07.2014 Gazette 2014/27)**

(54) **RICE CAKE COMPOSITION CONTAINING TAGATOSE, RICE CAKE USING SAME, AND PREPARATION METHOD THEREFOR**

REISKUCHENZUSAMMENSETZUNG, DIE TAGATOSE ENTHÄLT, REISKUCHEN DIE DIESE VERWENDEN UND DEREN HERSTELLUNG

GÂTEAU DE RIZ CONTENANT DU TAGATOSE, GÂTEAU DE RIZ UTILISANT CELUI-CI, ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2012 KR 20120151876**

(43) Date of publication of application:
**28.10.2015 Bulletin 2015/44**

(73) Proprietor: **Cj Cheiljedang Corporation
Seoul 100-400 (KR)**

(72) Inventors:
• **CHOI, Jong Min**
**Seoul 156-791 (KR)**
• **KIM, Young Jae**
**Seoul 150-909 (KR)**
• **PARK, Byung Gyu**
**Seoul 100-856 (KR)**
• **KIM, Seong Bo**
**Seoul 03727 (KR)**
• **PARK, Seung Won**
**Yongin-si**
**Gyeonggi-do 446-727 (KR)**

(74) Representative: **Nevant, Marc et al
Cabinet Beau de Loménie
158, rue de l'Université
75340 Paris Cedex 07 (FR)**

(56) References cited:
JP-A- 2002 281 906      JP-A- 2002 281 906
KR-B1- 100 779 160      KR-B1- 101 171 258
US-A1- 2002 160 090

• **Vanevalentine Food: "Easy Lemon Cake #SugarFreeNovember Recipe", , 14 November 2012 (2012-11-14), pages 1-3, XP002759255, Retrieved from the Internet: URL:http://www.food.vanevalentine.com/easy -lemon-cake-sugarfreenovember-recipe/ [retrieved on 2016-06-27]**
• **DATABASE WPI Week 201214 Thomson Scientific, London, GB; AN 2011-N59670 XP002759256, & KR 2011 0113285 A (CJ CHEILJEDANG CORP) 17 October 2011 (2011-10-17)**
• **DATABASE WPI Week 201224 Thomson Scientific, London, GB; AN 2011-N94595 XP002759257, & KR 2011 0117814 A (JOUNG NAM NONG HYUP) 28 October 2011 (2011-10-28)**
• **Anonymous: "Köstlicher Feuerwehrkuchen", , 12 November 2012 (2012-11-12), pages 1-2, XP002759258, Retrieved from the Internet: URL:http://tagatesse.blogspot.de/2012/11/k ostlicher-feuerwehrkuchen-kirschkuchen.htm l [retrieved on 2016-06-27]**

• LAURA M. ARMSTRONG ET AL: "Consumer evaluation of bakery product flavour as affected by incorporating the prebiotic tagatose", INTERNATIONAL JOURNAL OF FOOD SCIENCE AND TECHNOLOGY., vol. 44, no. 4, 1 April 2009 (2009-04-01), pages 815-819, XP055283777, GB ISSN: 0950-5423, DOI: 10.1111/j.1365-2621.2009.01909.x

**Description**

Technical Field

The present invention relates to a method of preparing a rice cake using tagatose.

Background Art

A rice cake is an age-old traditional Korean dish which is made by grinding grains, such as sticky rice and non-glutinous rice, into powder and processing, such as kneading and heating, the grain powder. A rice cake, which is tasty and nutritious, is a popular snack and is used as a substitute for breakfast, particularly by a growing number of single-person households or dual-income families in recent years, consumption thereof is steadily increasing.

For use of a rice cake as a meal substitute, a certain period of storage time is required. However, since a rice cake includes grain powder as a main ingredient, degradation of starch in the rice cake shortens the expiration date and preservation period.

In detail, as starch in a rice cake is recrystallized and solidified immediately after preparation of the rice cake, the rice cake is gradually hardened and decreases in moisture content. This phenomenon tends to accelerate over time, and accordingly physical properties and texture of the rice cake deteriorate within a relatively short period of time, shortening the expiration date and preservation period of the rice cake.

Korean Patent Registration No. 10-0377212 discloses, as a method for extending the storage period of a rice cake or suppressing degradation of starch, a method of preparing a rice cake which processes a rice cake filling with a particular ingredient to delay aging of the rice cake, and a rice cake prepared by the method. This technology relates to a method for suppressing aging of the rice cake by using a shortening having a limited amount of solid fat at about room temperature, but such a method is not useful for preparing a rice cake having no filling, such as steamed white rice cake (baekseolgi).

Korean Patent Publication No. 10-2012-0037819 discloses a method of producing a rice cake having improved taste and storage properties, in which β-amylase and trehalose are used to prepare a rice cake. However, when trehalose is employed as a main sweetener as in this method, a sweetening level can decrease to reduce taste for the rice cake and activity of β-amylase varies depending upon conditions, such as temperature, for preparation, distribution and storage of the rice cake to change physical properties and texture of the rice cake, thereby providing negative influence on the preservation of the rice cake.

Korean Patent Publication No. 2011-0117814 discloses a rice cake manufacturing method comprising: dipping grains in water for 0.5-24 hours; pulverizing the grains; mixing 50-62 wt% of the pulverized grains with 0.5-2 wt% of salt, 5-15 wt% of sugar, 5-10 wt% of trehalose, 0.1-0.5 wt% of emulsifier, 3-5 wt% of sorbitol and 15-25 wt% of purified water; kneading the mixture; steaming the mixed dough to manufacture a rice cake; and cooling the rice cake at room temperature.

Therefore, there is a need for development of a method and composition for suppressing change in physical properties and texture of a rice cake and extending a storage period of the rice cake.

Technical Problem

The present invention provides a rice cake having a longer storage period by suppressing starch retrogradation and water loss of the rice cake.

Specifically, the present invention is aimed at extending a storage period of a rice cake by including 1 to 20 parts by weight of tagatose based on 100 parts by weight of rice flour.

Technical Solution

The subject-matter of the present invention is defined by the claims.

Advantageous Effects

Embodiments of the present invention provide a method of preparing a rice cake using tagatose, thereby suppressing change in physical properties and texture of the rice cake and extending a storage period of the rice cake. In detail, the present invention adds tagatose in preparing a rice cake to suppress starch retrogradation and moisture loss of the rice cake, thereby maintaining quality and texture of the rice cake for a comparatively long period of time after preparation.

Further, the present invention uses tagatose, as a sweetener, having a similar sweetness to sugar but containing low calories, thereby providing a low-calorie rice cake having excellent flavor and texture.

Brief Description of Drawings

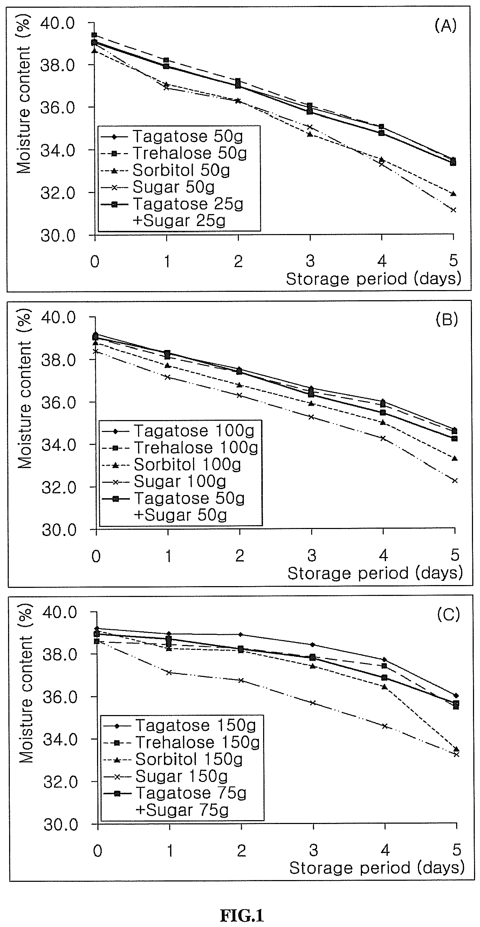

Fig. 1 is graphs depicting variations in moisture contents of rice cakes containing tagatose according to examples of the present invention and comparative examples during storage. In detail, graphs (A), (B), and (C) illustrate variations in moisture contents of the rice cakes containing 50 g, 100 g, and 150 g of sweeteners, respectively.

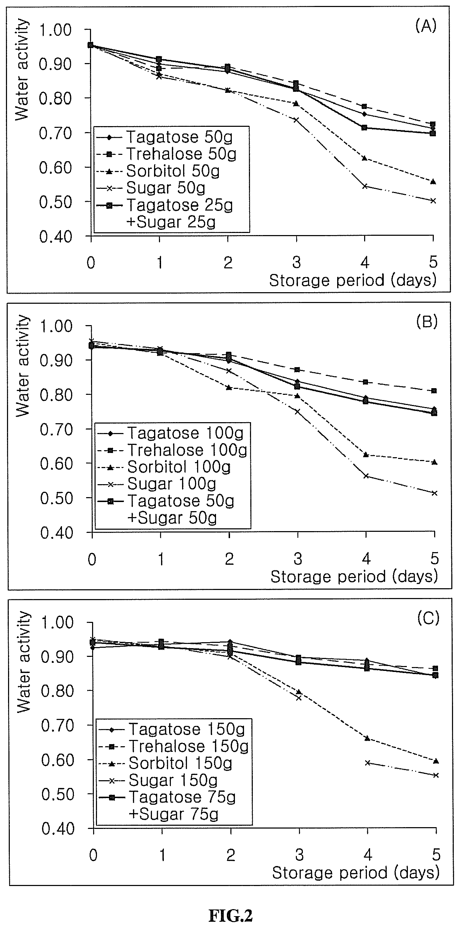

Fig. 2 is graphs depicting variations in water activities of rice cakes containing tagatose according to examples of the present invention and comparative examples during storage. In detail, graphs (A), (B), and (C) illustrate variations in water activities of the rice cakes containing 50 g, 100 g, and 150 g of sweeteners, respectively.

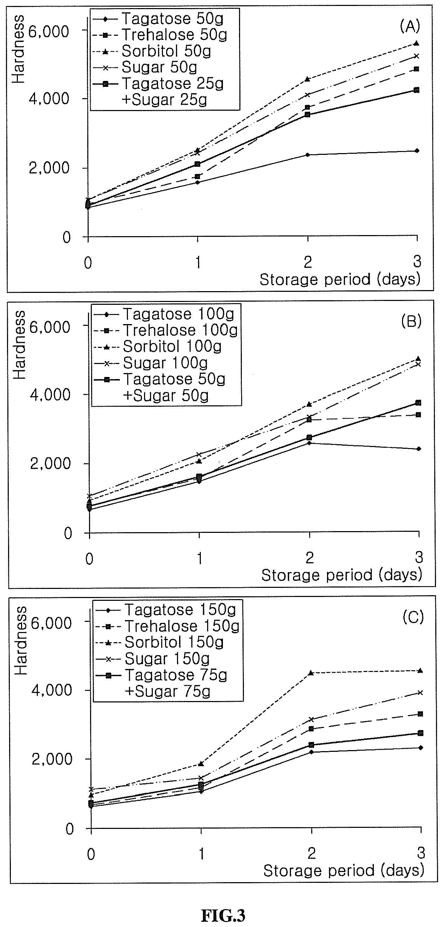

Fig. 3 is graphs depicting variations in hardness of rice cakes containing tagatose according to examples of the present invention and comparative examples during storage. In detail, graphs (A), (B), and (C) illustrate variations in hardness of the rice cakes containing 50 g, 100 g, and 150 g of sweeteners, respectively.

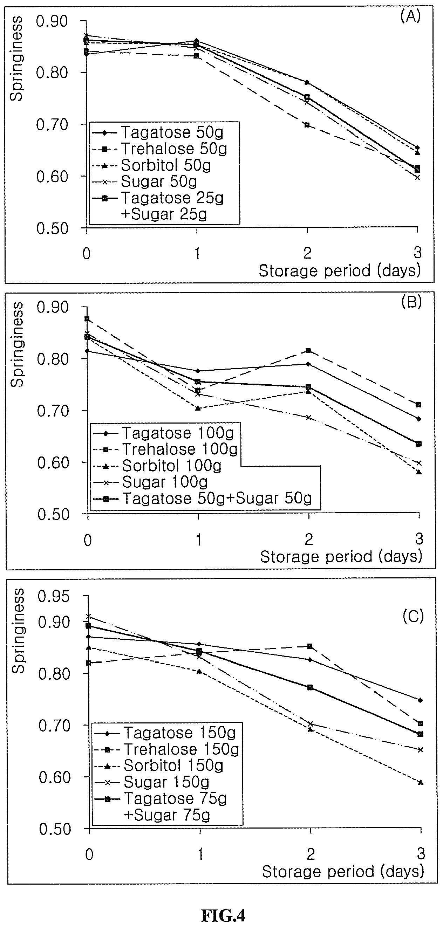

Fig. 4 is graphs depicting variations in springiness of rice cakes containing tagatose according to examples of the present invention and comparative examples during storage. In detail, graphs (A), (B), and (C) illustrate variations in springiness of the rice cakes containing 50 g, 100 g, and 150 g of sweeteners, respectively.

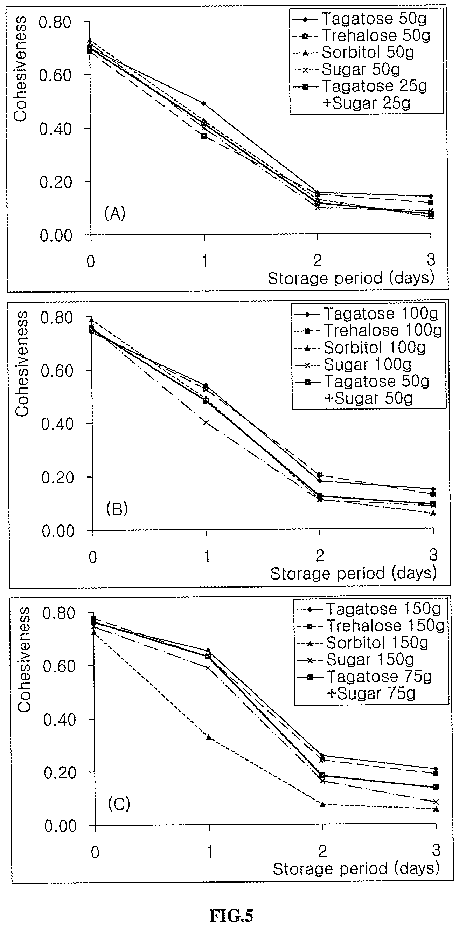

Fig. 5 is graphs depicting variations in cohesiveness of rice cakes containing tagatose according to examples of the present invention and comparative examples during storage. In detail, graphs (A), (B), and (C) illustrate variations in cohesiveness of the rice cakes containing 50 g, 100 g, and 150 g of sweeteners, respectively.

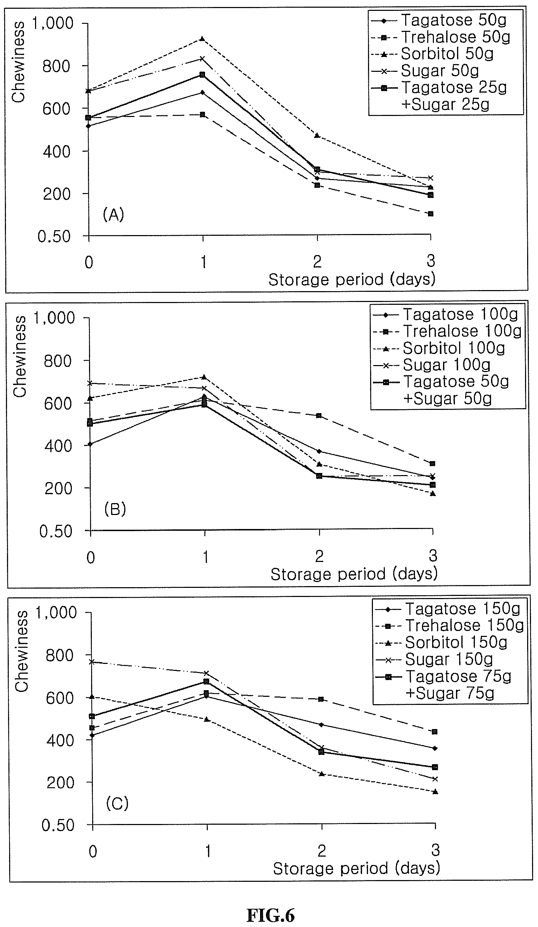

Fig. 6 is graphs depicting variations in chewiness of rice cakes containing tagatose according to examples of the present invention and comparative examples during storage. In detail, graphs (A), (B), and (C) illustrate variations in chewiness of the rice cakes containing 50 g, 100 g, and 150 g of sweeteners, respectively.

Mode for Invention

Hereinafter, embodiments of the present invention will be described in more detail. Descriptions of details apparent to those skilled in the art will be omitted for clarity.

One embodiment of the present invention provides a method of preparing a rice cake using tagatose in order to extend the storage period of the rice cake.

D-tagatose is an isomer of fructose, which is known as a naturally occurring low-calorie monosaccharide. Tagatose is about 92% as sweet as sugar. However, tagatose has only about 38% of the calories of sugar and only 4% of a glycemic index (GI) of sugar and has thus become popular as a sugar substitute.

Furthermore, the Food and Drug Administration (FDA) designated tagatose as generally recognized as safe (GRAS) and approved tagatose as a sweetener to be used for foods, drinks, health foods, diet additives, or the like. Tagatose is known to hardly have side effects for human consumption, and thus uses thereof are expected.

The present invention provides the method of preparing the rice cake which uses tagatose in preparing a rice cake, thereby not only providing substantially the same sweetness as sugar and reducing calories to be relatively free from calorie counting but also suppressing retrogradation of starch in the rice cake and improving water retention to extend a storage period.

Specifically, this embodiment provides a method of preparing a rice cake containing tagatose which includes mixing and kneading rice flour, salt, water, and tagatose; and heating and molding the dough.

Hereinafter, each operation of the method according to this embodiment will be described in detail.

Mixing and Kneading

Any method for mixing and/or kneading ingredients may be used, without being particularly limited. An unrestricted example may include subjecting the rice flour, salt and water to primary mixing and filtering with a sieve; and adding tagatose to the filtered primary mixture and subjecting the mixture to secondary mixing and kneading.

The filtering with the sieve is performed using preferably a 20-mesh to 100-mesh sieve, more preferably a 30-mesh to 70-mesh sieve.

Any method for obtaining the rice flour may be used. For example, commercially available rice flour may be may be obtained for direct use, or rice grains may be obtained and milled for use. According to an unrestricted example of obtaining rice flour by milling rice grains, obtained rice grains are soaked in water for about 2 to about 12 hours, drained for about 1 hour, and ground using a roller mill into rice flour, in which the number of grinding times may be adjusted as necessary.

In the mixing and kneading according to this embodiment, the salt is present in an amount of 0.1 to 10 parts by weight, preferably 0.1 to 5 parts by weight, and more preferably 0.1 to 3 parts by weight based on 100 parts by weight of the rice flour. The water used is present in an amount of 30 to 70 parts by weight, preferably 40 to 60 parts by weight based on 100 parts by weight of the rice flour.

Tagatose is present in an amount of 1 to 20 parts by weight. Within this range, sufficient effects of suppressing starch retrogradation and improving water retention by tagatose may be obtained.

In the secondary mixing and kneading according to this embodiment, sugar and/or other sweeteners may additionally be used along with tagatose.

The sugar is present in an amount of 0.1 to 30 parts by weight, preferably 0.5 to 20 parts by weight based on 100 parts by weight of the rice flour. Within this range, taste for the rice cake in view of sweetening level and flavor is improved in use of both tagatose and sugar as compared with in use of tagatose alone.

The sweeteners may include any sweetener used in foods. Non-limiting examples of the sweeteners may include glucose, fructose, lactose, oligosaccharide, maltose, xylose, erythritol, indigestible maltodextrin, honey, steviol glycosides, or the like. These sweeteners may be used alone or as a mixture.

The additional sweeteners are present in an amount of 0.1 to 30 parts by weight, preferably 0.5 to 20 parts by weight based on 100 parts by weight of the rice flour.

In preparation of the rice cake according to this embodiment, an emulsifier and/or other additives may be further used in addition to the foregoing ingredients.

Any emulsifier generally used for preparing food, such as rice cake or bread, may be available for this embodiment, without being particularly limited. Non-limiting examples of the emulsifier may include glycerol ester, propylene glycol ester, sucrose ester, sorbitan ester, monoglycerides, diglycerides, triglycerides, glycerin fatty acid ester, sucrose fatty acid ester, sorbitan fatty acid ester, propylene glycol fatty acid ester, polyoxyethylene sorbitan fatty acid ester, lecithin, or the like. These emulsifiers may be used alone or as a mixture.

Other additives applicable to this embodiment may include a food stabilizer and/or moisture retention agent.

Any food stabilizer generally used in food preparing may be used. Non-limiting examples of the food stabilizer may include alginate, sodium alginate, sodium propylene glycol alginate, casein, sodium caseinate, chondroitin sulfate, sodium chondroitin sulfate, cellulose, carboxy methyl cellulose, sodium carboxy methyl cellulose, sodium carboxy methyl starch, methyl cellulose, sodium polyacrylate, pectin, agar, gelatin, carrageenan, guar gum, tamarind gum, locust bean gum, arabic gum, xanthan gum, pullulan gum, gellan gum, welan gum, diutan gum, rhamsan gum, curdlan gum, furcellaran gum, tara gum, dextran, processed starch, sodium starch phosphate ester, chitosan, or the like. These stabilizers may be used alone or as a mixture.

Any moisture retention agent generally used for food preparing may be available, without being particularly limited. An example of the moisture retention agent may include dextrin.

Heating and Molding

Next, the aforementioned ingredients are mixed and kneaded into dough, which in turn is subjected to heating and molding, thereby preparing a rice cake containing tagatose.

In detail, the heating and molding of the dough may include placing the rice cake dough in an earthenware steamer and heating the dough, and cooling and molding the rice cake prepared by heating.

Heating the rice cake dough may be conducted by any method for preparing a rice cake generally used in the art, without being particularly limited. A non-limiting example of heating rice cake dough may be a method of placing rice cake dough in an earthenware steamer or the like and steaming the rice cake dough into a rice cake using steam heating.

Cooling and molding the heated rice cake may be conducted by any method for cooling a rice cake generally used in the art, without being particularly limited. A non-limiting example of cooling a rice cake may be a method of leaving a heated rice cake, for example, at room temperature (about 25°C) to decrease the internal temperature of the rice cake.

According to this embodiment, the method of preparing the rice cake containing tagatose is illustrated as follows.

Commercially available rice grains are washed and soaked in water for about 2 to 12 hours. The soaked grains are drained for about 1 hour and ground with a grinder, such as a roller mill, one or more times as needed. Salt and water are added to the ground rice flour to conduct primary mixing. The primary mixture is filtered through an about 20-mesh to 100-mesh sieve, after which tagatose and/or sugar and other sweeteners are added to the resulting mixture to conduct secondary mixing and kneading. Next, the dough is placed in an earthenware steamer with a wet cotton cloth spread and is flattened, after which the dough is steamed in a steamer for about 30 minutes, with the earthenware steamer being covered with a wet cotton cloth, and is allowed to stand for about 10 minutes, thereby preparing a rice cake. Subsequently, the rice cake is taken out of the earthenware steamer and cooled to room temperature (about 25°C) for about 10 minutes to 1 hour, thereby producing a rice cake containing tagatose.

The rice cake containing tagatose obtained by the method described above has a daily average variation in moisture content of preferably 1 to 4%, more preferably 1 to 3%. The daily average variation in moisture content of the rice cake tends to decrease with increase in tagatose content. Thus, when the tagatose content is increased within the aforementioned preferable tagatose content range (1 to 20 parts by weight based on 100 parts by weight of rice flour), the daily average variation in moisture content is most preferably 1 to 2%. Within this range, moisture content of the rice cake relatively slowly decreases to reduce a rate of change in quality and texture of the rice cake, thereby extending a storage period of the rice cake.

A method for measuring the moisture content of the rice cake may include any moisture content measurement method generally used in the art or similar arts. For example, a drying method by heating under ordinary pressure is preferably used to measure the moisture content.

A drying method by heating under ordinary pressure is a moisture content measurement method of calculating, as moisture content, reduced weight of a sample when the sample reaches a constant weight by heating at a slightly higher temperature (for example 105°C) than the boiling point of water (100°C).

In this embodiment, the daily average variation in moisture content is calculated by Equation 1:

[Equation 1]

$$\text{Daily average variation in moisture content} = \{(|x\text{-}y|/x)\times100(\%)\}/5 \text{ days,}$$

where x is the moisture content of the rice cake measured immediately after preparation of the rice cake from the rice cake composition (that is, the moisture content on the 0th storage day (0 hours after preparation)), and y is the moisture content measured 5 days after preparation of the rice cake (that is, the moisture content on the fifth storage day (120 hours after preparation).

|x-y| is an absolute value of a difference between x and y.

That is, the daily average variation in moisture content is a variation in moisture content of the rice cake during 5-day storage after preparation divided by 5 days.

Further, the rice cake containing tagatose according to this embodiment has a daily average variation in water activity of preferably 1 to 8%, more preferably 1 to 6%, and most preferably 1 to 4%. The daily average variation in water activity of the rice cake tends to decrease with an increase in tagatose content. Thus, when the tagatose content is increased within the aforementioned preferable tagatose content range (1 to 20 parts by weight based on 100 parts by weight of rice flour), the daily average variation in water activity is most preferably 1 to 2%. Within this range, a rate of change in water activity of the rice cake relatively slowly decreases to maintain quality and texture of the rice cake for a considerable period of time, thereby extending the storage period of the rice cake.

Water activity (Aw) is a ratio of vapor pressure (P) of water in food to vapor pressure (P0) of pure water at the same temperature (see Equation 2), which is known to be substantially associated with behaviors of microorganisms, particularly, saprogenic microorganisms, in foods.

[Equation 2]

$$\text{Water activity (Aw)} = \text{Vapor pressure of water in food (P) / vapor pressure of pure water (P0)}$$

In the present invention, the daily average variation in water activity is calculated by Equation 3:

[Equation 3]

$$\text{Daily average variation in water activity} = \{(|x'\text{-}y'|/x')\times100(\%)\}/5 \text{ days,}$$

where x' is the water activity of the rice cake measured immediately after preparation of the rice cake with the rice cake composition (that is, the water activity on the 0th storage day (0 hours after preparation)), and y' is the water activity measured 5 days after preparation of the rice cake (that is, the water activity on the fifth storage day (120 hours after preparation).

|x'-y'| is an absolute value of a difference between x' and y'.

That is, the daily average variation in water activity is a variation in water activity of the rice cake during 5-day storage after preparation divided by 5 days.

The rice cake containing tagatose according to this embodiment has an initial water activity, measured immediately after preparation of the rice cake, which is relatively low as compared with those containing sugar and other sweeteners and thus is sanitarily advantageous by inhibiting activities of microorganisms to suppress food contamination.

A method for measuring the water activity of the rice cake may include any water activity measurement method generally used in the art or similar fields. For example, a water activity meter (Aw meter, for example, AquaLab Series 3 TE, AquaLab, US) is preferably used to measure the water activity.

The rice cake containing tagatose according to this embodiment preferably has a daily average variation in hardness of 50% to 130%, more preferably 50% to 120%, still more preferably 60% to 90%. Within this range, rate of an increase in hardness of the rice cake decreases to maintain the quality and texture of the rice cake for a relatively considerable period of time, thereby extending the storage period of the rice cake.

Hardness is a measure of how hard a sample is, which represents a force needed to deform the sample to a certain degree. A method for measuring the hardness of the rice cake may include any hardness measurement method generally used in the art or similar fields. For example, a texture analyzer (for example, TA-XT2, Stable Micro Systems, Ltd., UK) is preferably used to measure the hardness of the rice cake.

In this embodiment, the daily average variation in hardness of the rice cake is calculated by Equation 4:

[Equation 4]

$$\text{Daily average variation in hardness} = \{(|a\text{-}b|/a) \times 100(\%)\}/3 \text{ days},$$

where a is the hardness of the rice cake measured immediately after preparation of the rice cake with the rice cake composition (that is, the hardness on the $0^{th}$ storage day (0 hours after preparation)), and b is the hardness measured 3 days after preparation of the rice cake (that is, the hardness on the third storage day (72 hours after preparation). |a-b| is an absolute value of a difference between a and b.

That is, the daily average variation in hardness is a variation in hardness of the rice cake during 3-day storage after preparation divided by 3 days.

The rice cake containing tagatose according to this embodiment has a daily average variation in springiness of, preferably, 3 to 10%, more preferably 3 to 9%, and most preferably 4 to 6%. Within this range, springiness of the rice cake slowly decreases, reducing the rate of the change in quality and texture of the rice cake, thereby extending the storage period of the rice cake.

Springiness refers to resilience defined as the ability of a sample to return to the original form after being deformed by an applied force. In this embodiment, the daily average variation in springiness of the rice cake is calculated by Equation 5:

[Equation 5]

$$\text{Daily average variation in springiness} = \{(|a'\text{-}b'|/a') \times 100(\%)\}/3 \text{ days},$$

where a' is the springiness of the rice cake measured immediately after preparation of the rice cake with the rice cake composition (that is, the springiness on the $0^{th}$ storage day (0 hours after preparation)), and b' is the springiness measured 3 days after preparation of the rice cake (that is, the springiness on the third storage day (72 hours after preparation).
|a'-b'| is an absolute value of a difference between a' and b'.

That is, the daily average variation in springiness is a variation in springiness of the rice cake during 3-day storage after preparation divided by 3 days.

A method for measuring the springiness of the rice cake may include any springiness measurement method generally used in the art or similar fields. For example, a texture analyzer (for example, TA-XT2, Stable Micro Systems, Ltd., England) is preferably used to measure the springiness of the rice cake.

The rice cake containing tagatose according to this embodiment has a daily average variation in cohesiveness of, preferably, 20 to 30%, more preferably 20 to 28%, and most preferably 20 to 27%. Within this range, cohesiveness of the rice cake relatively slowly decreases, reducing the rate of the change in quality and texture of the rice cake, thereby extending the storage period of the rice cake.

Cohesiveness refers to a force maintaining an original form of a sample. In this embodiment, the daily average variation in cohesiveness of the rice cake is calculated by Equation 6:

[Equation 6]

$$\text{Daily average variation in cohesiveness} = \{(\lvert a''\text{-}b'' \rvert / a'') \times 100(\%)\}/3 \text{ days},$$

where a" is the cohesiveness of the rice cake measured immediately after preparation of the rice cake with the rice cake composition (that is, the cohesiveness on the 0$^{th}$ storage day (0 hours after preparation)), and b" is the cohesiveness measured 3 days after preparation of the rice cake (that is, the cohesiveness on the third storage day (72 hours after preparation).
|a"-b"| is an absolute value of a difference between a" and b".

That is, the daily average variation in cohesiveness is a variation in cohesiveness of the rice cake during 3-day storage after preparation divided by 3 days.

A method for measuring the cohesiveness of the rice cake may include any cohesiveness measurement method generally used in the art or similar fields. For example, a texture analyzer (for example, TA-XT2, Stable Micro Systems, Ltd., England) is preferably used to measure the cohesiveness of the rice cake.

The rice cake containing tagatose according to this embodiment has a daily average variation in chewiness of, preferably, 4 to 23%, more preferably 4 to 20%, and most preferably 4 to 15%. Within this range, chewiness of the rice cake relatively slowly decreases to reduce the rate of the change in quality and texture of the rice cake, and accordingly chewy texture of the rice cake is maintained for a considerable period of time after preparation, thereby extending the storage period of the rice cake.

Chewiness refers to a force needed to render a solid sample swallowable. In this embodiment, the daily average variation in chewiness of the rice cake is calculated by Equation 7:

[Equation 7]

$$\text{Daily average variation in chewiness} = \{(\lvert a'''\text{-}b''' \rvert / a''') \times 100(\%)\}/3 \text{ days},$$

where, a''' is the chewiness of the rice cake measured immediately after preparation of the rice cake with the rice cake composition (that is, the chewiness on the 0$^{th}$ storage day (0 hours after preparation)), and b''' is the chewiness measured 3 days after preparation of the rice cake (that is, the chewiness on the third storage day (72 hours after preparation).
|a'''-b'''| is an absolute value of a difference between a" and b'''.

That is, the daily average variation in chewiness is a variation in chewiness of the rice cake during 3-day storage after preparation divided by 3 days.

A method for measuring the chewiness of the rice cake may include any chewiness measurement method generally used in the art or similar fields. For example, a texture analyzer (for example, TA-XT2, Stable Micro Systems, Ltd., England) is preferably used to measure the chewiness of the rice cake.

Hereinafter, the present invention will be described in more detail with reference to examples, comparative examples and experimental examples. These examples are provided for illustrative purposes only and are not to be construed in any way as limiting the present invention.

**Examples 1 to 6: Preparation of rice cake containing tagatose**

**Example 1**

Commercially available rice (Imgeumnimpyo Incheon rice, National Agricultural Cooperative Federation Incheon City) was washed and soaked in water for 12 hours. The soaked rice was drained for about 1 hour and ground twice using a roller mill. 1 kg of the ground rice flour, 10 g of salt, and 500 g of water were subjected to primary mixing. The primary mixture was filtered with a 50-mesh sieve and mixed with 50 g of tagatose, followed by secondary mixing and kneading.

Subsequently, the resulting dough was placed in a 15-cm-wide x 15-cm-long earthenware steamer with a wet cotton cloth spread and flattened to a thickness of 2 cm. Next, a line was drawn in the flattened dough to a 3-cm-wide x 3-cm-long and the earthenware steamer was covered with a wet cotton cloth, after which the dough was steamed in a steamer for 30 minutes and allowed to stand for 10 minutes to make a rice cake. The rice cake was taken out of the earthenware steamer and cooled to room temperature (25°C) for 20 minutes, thereby obtaining a 3-cm-wide x 3-cm-long x 2-cm-thick sample of a rice cake containing tagatose.

**Example 2**

A rice cake containing tagatose was prepared in the same manner as in Example 1 except that 100 g of tagatose was added in the secondary mixing and kneading of Example 1.

**Example 3**

A rice cake containing tagatose was prepared in the same manner as in Example 1 except that 150 g of tagatose was added in the secondary mixing and kneading of Example 1.

**Example 4**

A rice cake containing tagatose was prepared in the same manner as in Example 1 except that 25 g of tagatose and 25 g of sugar were added, instead of 50 g of tagatose, in the secondary mixing and kneading of Example 1.

**Example 5**

A rice cake containing tagatose was prepared in the same manner as in Example 1 except that 50 g of sugar was added in the secondary mixing and kneading of Example 1.

**Example 6**

A rice cake containing tagatose was prepared in the same manner as in Example 1 except that 75 g of tagatose and 75 g of sugar were added, instead of 50 g of tagatose, in the secondary mixing and kneading of Example 1.

**Comparative Examples 1 to 9: Preparation of tagatose-free rice cake**

**Comparative Example 1**

A rice cake containing tagatose was prepared in the same manner as in Example 1 except that 50 g of trehalose was added, instead of 50 g of tagatose, in the secondary mixing and kneading of Example 1.

**Comparative Example 2**

A rice cake containing tagatose was prepared in the same manner as in Example 1 except that 100 g of trehalose was added, instead of 50 g of tagatose, in the secondary mixing and kneading of Example 1.

**Comparative Example 3**

A rice cake containing tagatose was prepared in the same manner as in Example 1 except that 150 g of trehalose was added, instead of 50 g of tagatose, in the secondary mixing and kneading of Example 1.

**Comparative Example 4**

A rice cake containing tagatose was prepared in the same manner as in Example 1 except that 50 g of D-sorbitol was added, instead of 50 g of tagatose, in the secondary mixing and kneading of Example 1.

**Comparative Example 5**

A rice cake containing tagatose was prepared in the same manner as in Example 1 except that 100 g of D-sorbitol was added, instead of 50 g of tagatose, in the secondary mixing and kneading of Example 1.

**Comparative Example 6**

A rice cake containing tagatose was prepared in the same manner as in Example 1 except that 150 g of D-sorbitol was added, instead of 50 g of tagatose, in the secondary mixing and kneading of Example 1.

**Comparative Example 7**

A rice cake containing tagatose was prepared in the same manner as in Example 1 except that 50 g of sugar was added, instead of 50 g of tagatose, in the secondary mixing and kneading of Example 1.

**Comparative Example 8**

A rice cake containing tagatose was prepared in the same manner as in Example 1 except that 100 g of sugar was added, instead of 50 g of tagatose, in the secondary mixing and kneading of Example 1.

**Comparative Example 9**

A rice cake containing tagatose was prepared in the same manner as in Example 1 except that 150 g of sugar was added, instead of 50 g of tagatose, in the secondary mixing and kneading of Example 1.

Compositions used in Examples 1 to 6 and Comparative Examples 1 to 9 are listed in Table 1.

**TABLE 1**

| Composition(g) | Basic composition | | | Sweetener | | | |
|---|---|---|---|---|---|---|---|
| | Rice flour | Salt | Water | Tagatose | Sugar | Trehalose | Sorbitol |
| Example 1 | 1,000 | 10 | 500 | 50 | - | - | - |
| Example 2 | | | | 100 | - | - | - |
| Example 3 | | | | 150 | - | - | - |
| Example 4 | | | | 25 | 25 | - | - |
| Example 5 | | | | 50 | 50 | - | - |
| Example 6 | | | | 75 | 75 | - | - |
| Comparative Example 1 | | | | - | - | 50 | - |
| Comparative Example 2 | | | | - | - | 100 | - |
| Comparative Example 3 | | | | - | - | 150 | - |
| Comparative Example 4 | | | | - | - | - | 50 |
| Comparative Example 5 | | | | - | - | - | 100 |
| Comparative Example 6 | | | | - | - | - | 150 |
| Comparative Example 7 | | | | - | 50 | - | - |
| Comparative Example 8 | | | | - | 100 | - | - |
| Comparative Example 9 | | | | - | 150 | - | - |

The respective rice cake samples prepared in Examples 1 to 6 and Comparative Examples 1 to 9 were stored under the following conditions and subjected to the following experiments in order to evaluate storage properties thereof.

**Storage of rice cakes prepared in Examples 1 to 6 and Comparative Examples 1 to 9**

The respective rice cake samples prepared in Examples 1 to 6 and Comparative Examples 1 to 9 were put in an airtight container (Desiccator) to prevent infiltration of moisture from the outside into the rice cake samples and stored for 3 to 5 days, while conducting the following experiments every day.

The airtight container storing each rice cake sample was maintained under internal conditions of 33% RH and 25°C using a saturated salt solution ($MgCl_2$). The set humidity is about half of Korean average annual humidity (about 65%), which is a severer condition for accelerating the experiments.

Experimental Example 1: Measurement of variation in moisture content of rice cake during storage

To evaluate variations in moisture contents of the respective rice cake samples prepared in Examples 1 to 6 and Comparative Examples 1 to 9 during storage, the rice cake samples were stored under the foregoing storage conditions, while measuring the moisture contents of the respective rice cake samples every day for 5 days by a drying method by heating to 105°C under ordinary pressure. The moisture contents of the respective rice cake samples were measured five times a day, an average value of which was calculated.

Experiment results are shown in Tables 2 and 3 and Fig. 1. In the following tables, measurements are listed according to sweetener contents of the rice cakes.

**TABLE 2**

| | Sweetener | Water content during storage (%) | | | | | |
|---|---|---|---|---|---|---|---|
| | | Immediately after preparation (0 day) | 1 day | 2 days | 3 days | 4 days | 5 days |
| Example 1 | 50 g of tagatose | 39.1 | 37.9 | 37.0 | 35.9 | 5.0 | 33.5 |
| Comparative Example 1 | 50 g of trehalose | 39.4 | 38.2 | 37.2 | 36.1 | 35.0 | 33.5 |
| Comparative Example 4 | 50 g of sorbitol | 38.7 | 37.1 | 36.3 | 34.7 | 33.5 | 31.9 |
| Comparative Example 7 | 50 g of sugar | 39.0 | 36.9 | 36.3 | 35.0 | 33.3 | 31.1 |
| Example 4 | 25 g of sugar + 25 g of tagatose | 39.1 | 37.9 | 37.0 | 35.7 | 34.8 | 3.3 |
| Example 2 | 100 g of tagatose | 39.2 | 38.3 | 37.6 | 36.6 | 36.0 | 34.6 |
| Comparative Example 2 | 100 g of trehalose | 39.0 | 38.1 | 37.4 | 36.5 | 35.8 | 34.5 |
| Comparative Example 5 | 100 g of sorbitol | 38.8 | 37.7 | 36.8 | 35.9 | 35.0 | 33.3 |
| Comparative Example 8 | 100 g of sugar | 38.4 | 37.2 | 36.3 | 35.3 | 34.2 | 32.2 |
| Example 5 | 50 g of sugar + 50 g of tagatose | 39.0 | 38.3 | 37.4 | 36.3 | 35.5 | 34.2 |
| Example 3 | 150 g of tagatose | 39.2 | 38.9 | 38.9 | 38.4 | 37.7 | 36.0 |
| Comparative Example 3 | 150 g of trehalose | 38.6 | 38.4 | 38.3 | 37.8 | 37.4 | 35.4 |
| Comparative Example 6 | 150 g of sorbitol | 39.1 | 38.2 | 38.1 | 37.4 | 36.4 | 33.5 |
| Comparative Example 9 | 150 g of sugar | 38.6 | 37.1 | 36.7 | 35.7 | 34.6 | 33.2 |
| Example 6 | 75 g of sugar + 75 g of tagatose | 38.9 | 38.7 | 38.2 | 37.8 | 36.8 | 35.6 |

**TABLE 3**

| | Sweetener | Moisture content variation for 5 days | | Daily average variation in moisture content | |
|---|---|---|---|---|---|
| | | Reduced amount (%) (absolute value) | Reduction rate (%) (compared to initial value) | Reduced amount (%) (absolute value) | Reduction rate (%) (compared to initial value) |
| Example 1 | 50 g of tagatose | 5.6 | 14.3 | 1.1 | 2.9 |
| Comparative Example 1 | 50 g of trehalose | 5.9 | 15.1 | 1.2 | 3.0 |
| Comparative Example 4 | 50 g of sorbitol | 6.8 | 17.5 | 1.4 | 3.5 |
| Comparative Example 7 | 50 g of sugar | 7.9 | 20.2 | 1.6 | 4.0 |
| Example 4 | 25 g of sugar + 25 g of tagatose | 5.7 | 14.7 | 1.1 | 2.9 |
| Example 2 | 100 g of tagatose | 4.6 | 11.7 | 0.9 | 2.3 |
| Comparative Example 2 | 100 g of trehalose | 4.5 | 11.5 | 0.9 | 2.3 |
| Comparative Example 5 | 100 g of sorbitol | 5.5 | 14.3 | 1.1 | 2.9 |
| Comparative Example 8 | 100 g of sugar | 6.2 | 16.1 | 1.2 | 3.2 |
| Example 5 | 50 g of sugar + 50 g of tagatose | 4.8 | 12.3 | 1.0 | 2.5 |
| Example 3 | 150 g of tagatose | 3.2 | 8.2 | 0.6 | 1.6 |
| Comparative Example 3 | 150 g of trehalose | 3.2 | 8.2 | 0.6 | 1.6 |
| Comparative Example 6 | 150 g of sorbitol | 5.6 | 14.4 | 1.1 | 2.9 |
| Comparative Example 9 | 150 g of sugar | 5.4 | 14.0 | 1.1 | 2.8 |
| Example 6 | 75 g of sugar + 75 g of tagatose | 3.3 | 8.5 | 0.7 | 1.7 |

The measurement results shown in Tables 2 and 3 and Fig. 1 show that the respective rice cake samples were similar in initial moisture content and all the samples decreased in moisture content overall with storage time. Further, it was commonly observed that moisture loss levels of the rice cakes tend to decrease with an increase in sweetener content. This tendency is considered to be due to an increase in sweetener content which leads to increasing actions of OH- groups, so that the sweeteners have a stronger bonding force with moisture to improve water retention.

On the other hand, the moisture loss levels were significantly different depending on kinds of the sweeteners used for the respective rice cake samples and became more distinctly different with a longer period of storage. In detail, when comparing the rice cake samples using equivalent amounts of the sweeteners (classified into three cases of 50 g, 100 g, and 150 g), the rice cake samples using tagatose in all the three cases showed the least moisture loss on the fifth storage day after preparation.

Trehalose was evaluated as a sweetener showing next excellent water retention following tagatose. However, tagatose has a sweetening level about 92% of that of sugar, whereas trehalose has a sweetening level merely about 45% of that of sugar, and accordingly it is considered inappropriate to use trehalose as a main sweetener for preparation of a rice cake.

Experimental Example 2: Measurement of variation in water activity of rice cake during storage

To evaluate variation in water activities of the respective rice cake samples prepared in Examples 1 to 6 and Comparative Examples 1 to 9 during storage, the rice cake samples were stored under the foregoing storage conditions, while measuring the water activities of the respective rice cake samples every day for 5 days using a water activity meter (Aw meter, AquaLab Series 3 TE, AquaLab, US). The water activities were measured on the respective samples put in sample cups at 26°C in equilibrium of relative humidity using the water activity meter from which inside impurities were thoroughly removed. The water activities of the respective rice cake samples were measured three times a day, an average value of which was calculated.

Experiment results are shown in Tables 4 and 5 and Fig. 2.

**TABLE 4**

| | Sweetener | Water activity during storage | | | | | |
|---|---|---|---|---|---|---|---|
| | | Immediately after preparation (0 day) | 1 day | 2 days | 3 days | 4 days | 5 days |
| Example 1 | 50 g of tagatose | 0.952 | 0.899 | 0.877 | 0.825 | 0.752 | 0.711 |
| Comparative Example 1 | 50 g of trehalose | 0.954 | 0.885 | 0.891 | 0.842 | 0.774 | 0.722 |
| Comparative Example 4 | 50 g of sorbitol | 0.954 | 0.871 | 0.821 | 0.784 | 0.624 | 0.557 |
| Comparative Example 7 | 50 g of sugar | 0.958 | 0.863 | 0.822 | 0.736 | 0.543 | 0.500 |
| Example 4 | 25 g of sugar + 25 g of tagatose | 0.954 | 0.912 | 0.884 | 0.826 | 0.713 | 0.695 |
| Example 2 | 100 g of tagatose | 0.939 | 0.929 | 0.896 | 0.837 | 0.789 | 0.756 |
| Comparative Example 2 | 100 g of trehalose | 0.945 | 0.921 | 0.916 | 0.871 | 0.833 | 0.807 |
| Comparative Example 5 | 100 g of sorbitol | 0.952 | 0.920 | 0.820 | 0.795 | 0.623 | 0.600 |
| Comparative Example 8 | 100 g of sugar | 0.956 | 0.934 | 0.868 | 0.750 | 0.561 | 0.511 |
| Example 5 | 50 g of sugar + 50 g of tagatose | 0.942 | 0.927 | 0.905 | 0.822 | 0.777 | 0.742 |
| Example 3 | 150 g of tagatose | 0.926 | 0.935 | 0.941 | 0.895 | 0.885 | 0.839 |
| Comparative Example 3 | 150 g of trehalose | 0.939 | 0.943 | 0.929 | 0.895 | 0.875 | 0.861 |
| Comparative Example 6 | 150 g of sorbitol | 0.947 | 0.929 | 0.909 | 0.794 | 0.659 | 0.594 |
| Comparative Example 9 | 150 g of sugar | 0.950 | 0.929 | 0.897 | 0.778 | 0.589 | 0.552 |
| Example 6 | 75 g of sugar + 75 g of tagatose | 0.942 | 0.926 | 0.915 | 0.882 | 0.862 | 0.841 |

**TABLE 5**

| | Sweetener | Water activity variation for 5 days | | Daily average variation in water activity | |
|---|---|---|---|---|---|
| | | Reduced amount (absolute value) | Reduction rate (%) (compared to initial value) | Reduced amount (absolute value) | Reduction rate (%) (compared to initial value) |
| Example 1 | 50 g of tagatose | 0.242 | 25.4 | 0.048 | 5.1 |
| Comparative Example 1 | 50 g of trehalose | 0.232 | 24.3 | 0.046 | 4.9 |
| Comparative Example 4 | 50 g of sorbitol | 0.397 | 41.6 | 0.079 | 8.3 |
| Comparative Example 7 | 50 g of sugar | 0.458 | 47.8 | 0.092 | 9.6 |
| Example 4 | 25 g of sugar + 25 g of tagatose | 0.259 | 27.1 | 0.052 | 5.4 |
| Example 2 | 100 g of tagatose | 0.184 | 19.6 | 0.037 | 3.9 |
| Comparative Example 2 | 100 g of trehalose | 0.138 | 14.6 | 0.028 | 2.9 |
| Comparative Example 5 | 100 g of sorbitol | 0.351 | 36.9 | 0.070 | 7.4 |
| Comparative Example 8 | 100 g of sugar | 0.445 | 46.6 | 0.089 | 9.3 |
| Example 5 | 50 g of sugar + 50 g of tagatose | 0.200 | 21.2 | 0.040 | 4.2 |
| Example 3 | 150 g of tagatose | 0.087 | 9.4 | 0.017 | 1.9 |
| Comparative Example 3 | 150 g of trehalose | 0.077 | 8.2 | 0.015 | 1.6 |
| Comparative Example 6 | 150 g of sorbitol | 0.353 | 37.3 | 0.071 | 7.5 |
| Comparative Example 9 | 150 g of sugar | 0.398 | 41.9 | 0.080 | 8.4 |
| Example 6 | 75 g of sugar + 75 g of tagatose | 0.100 | 10.6 | 0.020 | 2.1 |

The measurement results shown in Tables 4 and 5 and Fig. 2 show that all the samples decreased in water activity overall with storage time. In detail, the rice cakes containing tagatose had lowest initial water activities immediately after preparation of the rice cake and thus were the most sanitary against microorganism growth, and the rice cake samples containing the other sweeteners were similar in initial water activity.

On the other hand, the rice cakes respectively containing tagatose and trehalose alone, and the rice cakes containing tagatose and sugar together tended to decrease in water activity with an increase in sweetener content. The rice cakes respectively containing sorbitol and sugar alone also tended to decrease in water activity with an increase in sweetener content, in which the decrease in water activity were not remarkable as compared with those of the foregoing three cases.

Variations in water activity became more distinctly different depending on kinds of the sweeteners used for the respective rice cake samples with a longer period of storage. In detail, when comparing the rice cake samples using equivalent amounts of the sweeteners (classified into three cases of 50 g, 100 g, and 150 g), the rice cake samples using trehalose and tagatose in all three cases showed the least decrease in water activity on the fifth storage day after preparation. However, trehalose has a sweetening level merely about 45% of that of sugar, and accordingly it is considered inappropriate to use trehalose as a main sweetener for preparation of a rice cake.

Obviously, the rice cakes containing sugar alone had the greatest decrease in water activity, whereas the rice cakes containing sugar and tagatose together maintained a substantial level of water activity.

Experimental Example 3: Measurement of variation in texture of rice cake during storage

To evaluate variations in texture of the respective rice cake samples prepared in Examples 1 to 6 and Comparative Examples 1 to 9 during storage, the rice cake samples were stored under the foregoing storage conditions, while conducting texture profile analysis to measure hardness, springiness, cohesiveness, and chewiness of the respective rice cake samples every day for 3 days using a texture analyzer (TA-XT2, Stable Micro Systems, Ltd., England).

Texture profile analysis was carried out using the texture analyzer under the following conditions listed in Table 6, in which the rice cake samples were subjected to a two-bite compression test using a cylindrical probe with a diameter of 50 mm. The variations in texture of the respective rice cake samples were evaluated eight times a day for 3 days, an average value of which was calculated.

Experimental results are shown in Tables 7 to 12 and Figs. 3 to 6.

**TABLE 6**

| Parameter | Condition |
|---|---|
| Sample size | $3 \times 3 \times 2$ cm$^3$ |
| Probe | Cylinder-shaped with diameter of 50 mm |
| Test type | TPA |
| Measurement type | Two-bite compression test |
| Distance | 50% strain |
| Pre-test speed | 5 mm/sec |
| Test speed | 1 mm/sec |
| Post-test speed | 5 mm/sec |
| Time | 3 seconds |
| Measured properties | Hardness, springiness, cohesiveness, chewiness |

**TABLE 7**

| | Sweetener | Hardness during storage | | | |
|---|---|---|---|---|---|
| | | Immediately after preparation (0 day) | 1 day | 2 days | 3 days |
| Example 1 | 50 g of tagatose | 862.6 | 1594.5 | 2378.0 | 2482.3 |
| Comparative Example 1 | 50 g of trehalose | 980.9 | 1758.2 | 3746.0 | 4854.2 |
| Comparative Example 4 | 50 g of sorbitol | 1092.7 | 2537.5 | 4572.7 | 5606.5 |
| Comparative Example 7 | 50 g of sugar | 1084.7 | 2447.3 | 4113.2 | 5236.4 |
| Example 4 | 25 g of sugar + 25 g of tagatose | 923.1 | 2122.2 | 3532.0 | 4232.2 |
| Example 2 | 100 g of tagatose | 673.2 | 1495.0 | 2583.0 | 2395.6 |

(continued)

| | Sweetener | Hardness during storage | | | |
|---|---|---|---|---|---|
| | | Immediately after preparation (0 day) | 1 day | 2 days | 3 days |
| Comparative Example 2 | 100 g of trehalose | 788.3 | 1574.3 | 3257.5 | 3371.0 |
| Comparative Example 5 | 100 g of sorbitol | 942.7 | 2086.4 | 3711.6 | 5022.4 |
| Comparative Example 8 | 100 g of sugar | 1072.7 | 2276.5 | 3338.1 | 4862.3 |
| Example 5 | 50 g of sugar + 50 g of tagatose | 791.3 | 1621.2 | 2942.2 | 3721.2 |
| Example 3 | 150 g of tagatose | 621.4 | 1057.0 | 2190.9 | 2297.4 |
| Comparative Example 3 | 150 g of trehalose | 637.6 | 1172.0 | 2856.7 | 3274.5 |
| Comparative Example 6 | 150 g of sorbitol | 977.9 | 1878.2 | 4492.3 | 4547.0 |
| Comparative Example 9 | 150 g of sugar | 1125.7 | 1456.2 | 3131.8 | 3905.9 |
| Example 6 | 75 g of sugar + 75 g of tagatose | 751.2 | 1264.2 | 2389.2 | 2721.0 |

**TABLE 8**

| | Sweetener | Springiness during storage | | | |
|---|---|---|---|---|---|
| | | Immediately after preparation (0 day) | 1 day | 2 days | 3 days |
| Example 1 | 50 g of tagatose | 0.84 | 0.86 | 0.78 | 0.71 |
| Comparative Example 1 | 50 g of trehalose | 0.84 | 0.83 | 0.70 | 0.62 |
| Comparative Example 4 | 50 g of sorbitol | 0.86 | 0.85 | 0.78 | 0.64 |
| Comparative Example 7 | 50 g of sugar | 0.87 | 0.85 | 0.74 | 0.60 |
| Example 4 | 25 g of sugar + 25 g of tagatose | 0.86 | 0.85 | 0.75 | 0.61 |
| Example 2 | 100 g of tagatose | 0.82 | 0.78 | 0.79 | 0.68 |
| Comparative Example 2 | 100 g of trehalose | 0.88 | 0.74 | 0.81 | 0.71 |
| Comparative Example 5 | 100 g of sorbitol | 0.84 | 0.70 | 0.73 | 0.58 |
| Comparative Example 8 | 100 g of sugar | 0.85 | 0.73 | 0.68 | 0.60 |
| Example 5 | 50 g of sugar + 50 g of tagatose | 0.84 | 0.75 | 0.74 | 0.63 |
| Example 3 | 150 g of tagatose | 0.87 | 0.88 | 0.82 | 0.74 |

(continued)

|  | Sweetener | Springiness during storage | | | |
| --- | --- | --- | --- | --- | --- |
|  |  | Immediately after preparation (0 day) | 1 day | 2 days | 3 days |
| Comparative Example 3 | 150 g of trehalose | 0.82 | 0.84 | 0.85 | 0.70 |
| Comparative Example 6 | 150 g of sorbitol | 0.85 | 0.80 | 0.69 | 0.59 |
| Comparative Example 9 | 150 g of sugar | 0.91 | 0.83 | 0.70 | 0.65 |
| Example 6 | 75 g of sugar + 75 g of tagatose | 0.89 | 0.84 | 0.75 | 0.68 |

**TABLE 9**

|  | Sweetener | Cohesiveness during storage | | | |
| --- | --- | --- | --- | --- | --- |
|  |  | Immediately after preparation (0 day) | 1 day | 2 days | 3 days |
| Example 1 | 50 g of tagatose | 0.70 | 0.49 | 0.15 | 0.12 |
| Comparative Example 1 | 50 g of trehalose | 0.69 | 0.37 | 0.15 | 0.11 |
| Comparative Example 4 | 50 g of sorbitol | 0.73 | 0.43 | 0.13 | 0.06 |
| Comparative Example 7 | 50 g of sugar | 0.72 | 0.40 | 0.10 | 0.09 |
| Example 4 | 25 g of sugar + 25 g of tagatose | 0.70 | 0.42 | 0.12 | 0.07 |
| Example 2 | 100 g of tagatose | 0.74 | 0.54 | 0.18 | 0.15 |
| Comparative Example 2 | 100 g of trehalose | 0.75 | 0.53 | 0.20 | 0.13 |
| Comparative Example 5 | 100 g of sorbitol | 0.79 | 0.49 | 0.11 | 0.06 |
| Comparative Example 8 | 100 g of sugar | 0.76 | 0.40 | 0.11 | 0.09 |
| Example 5 | 50 g of sugar + 50 g of tagatose | 0.75 | 0.48 | 0.12 | 0.09 |
| Example 3 | 150 g of tagatose | 0.76 | 0.65 | 0.26 | 0.21 |
| Comparative Example 3 | 150 g of trehalose | 0.78 | 0.63 | 0.24 | 0.19 |
| Comparative Example 6 | 150 g of sorbitol | 0.72 | 0.33 | 0.08 | 0.06 |
| Comparative Example 9 | 150 g of sugar | 0.75 | 0.59 | 0.16 | 0.08 |
| Example 6 | 75 g of sugar + 75 g of tagatose | 0.76 | 0.63 | 0.18 | 0.14 |

**TABLE 10**

| | Sweetener | Chewiness during storage | | | |
|---|---|---|---|---|---|
| | | Immediately after preparation (0 day) | 1 day | 2 days | 3 days |
| Example 1 | 50 g of tagatose | 504.7 | 672.6 | 287.1 | 207.3 |
| Comparative Example 1 | 50 g of trehalose | 566.9 | 565.5 | 233.8 | 146.1 |
| Comparative Example 4 | 50 g of sorbitol | 684.0 | 925.7 | 471.4 | 223.1 |
| Comparative Example 7 | 50 g of sugar | 679.9 | 829.2 | 298.7 | 267.0 |
| Example 4 | 25 g of sugar + 25 g of tagatose | 555.9 | 754.2 | 309.4 | 187.5 |
| Example 2 | 100 g of tagatose | 406.3 | 626.3 | 368.5 | 239.9 |
| Comparative Example 2 | 100 g of trehalose | 516.2 | 612.3 | 535.2 | 304.6 |
| Comparative Example 5 | 100 g of sorbitol | 624.1 | 719.4 | 308.2 | 166.1 |
| Comparative Example 8 | 100 g of sugar | 692.0 | 667.1 | 251.3 | 247.9 |
| Example 5 | 50 g of sugar + 50 g of tagatose | 502.2 | 589.8 | 269.4 | 215.3 |
| Example 3 | 150 g of tagatose | 410.5 | 603.5 | 465.3 | 347.9 |
| Comparative Example 3 | 150 g of trehalose | 404.7 | 618.7 | 587.0 | 430.2 |
| Comparative Example 6 | 150 g of sorbitol | 605.9 | 496.2 | 237.1 | 149.0 |
| Comparative Example 9 | 150 g of sugar | 767.3 | 713.3 | 360.2 | 208.1 |
| Example 6 | 75 g of sugar + 75 g of tagatose | 512.0 | 671.9 | 330.9 | 252.2 |

**TABLE 11**

| | Sweetener | Daily average variation in texture | | | |
|---|---|---|---|---|---|
| | | Hardness | | Springiness | |
| | | Variation amount (g force) (absolute value) | Variation rate (%) (compared to initial value) | Variation amount (absolute value) | Variation rate (%) (compared to initial value) |
| Example 1 | 50 g of tagatose | 539.9 | 62.6 | 0.043 | 5.2 |
| Comparative Example 1 | 50 g of trehalose | 1291.1 | 131.6 | 0.075 | 8.9 |
| Comparative Example 4 | 50 g of sorbitol | 1504.6 | 137.7 | 0.071 | 8.3 |

(continued)

| | Sweetener | Daily average variation in texture | | | |
|---|---|---|---|---|---|
| | | Hardness | | Springiness | |
| | | Variation amount (g force) (absolute value) | Variation rate (%) (compared to initial value) | Variation amount (absolute value) | Variation rate (%) (compared to initial value) |
| Comparative Example 7 | 50 g of sugar | 1383.9 | 127.6 | 0.092 | 10.5 |
| Example 4 | 25 g of sugar + 25 g of tagatose | 1103.0 | 119.5 | 0.084 | 9.7 |
| Example 2 | 100 g of tagatose | 574.1 | 85.3 | 0.045 | 5.5 |
| Comparative Example 2 | 100 g of trehalose | 860.9 | 109.2 | 0.056 | 6.4 |
| Comparative Example 5 | 100 g of sorbitol | 1359.9 | 144.3 | 0.087 | 10.4 |
| Comparative Example 8 | 100 g of sugar | 1263.2 | 117.8 | 0.084 | 9.9 |
| Example 5 | 50 g of sugar + 50 g of tagatose | 976.7 | 123.4 | 0.070 | 8.3 |
| Example 3 | 150 g of tagatose | 558.7 | 89.9 | 0.045 | 5.2 |
| Comparative Example 3 | 150 g of trehalose | 879.0 | 137.9 | 0.038 | 4.7 |
| Comparative Example 6 | 150 g of sorbitol | 1189.7 | 121.7 | 0.089 | 10.4 |
| Comparative Example 9 | 150 g of sugar | 926.7 | 82.3 | 0.087 | 9.6 |
| Example 6 | 75 g of sugar + 75 g of tagatose | 656.6 | 87.4 | 0.069 | 7.7 |

**TABLE 12**

| | Sweetener | Daily average variation in texture | | | |
|---|---|---|---|---|---|
| | | Cohesiveness | | Chewiness | |
| | | Variation amount (absolute value) | Variation rate (%) (compared to initial value) | Variation amount (g force) (absolute value) | Variation rate (%) (compared to initial value) |
| Example 1 | 50 g of tagatose | 0.194 | 27.7 | 99.1 | 19.6 |
| Comparative Example 1 | 50 g of trehalose | 0.191 | 27.8 | 140.3 | 24.7 |

(continued)

| | Sweetener | Daily average variation in texture | | | |
|---|---|---|---|---|---|
| | | Cohesiveness | | Chewiness | |
| | | Variation amount (absolute value) | Variation rate (%) (compared to initial value) | Variation amount (g force) (absolute value) | Variation rate (%) (compared to initial value) |
| Comparative Example 4 | 50 g of sorbitol | 0.223 | 30.5 | 153.6 | 22.5 |
| Comparative Example 7 | 50 g of sugar | 0.211 | 29.4 | 137.6 | 20.2 |
| Example 4 | 25 g of sugar + 25 g of tagatose | 0.209 | 29.9 | 122.8 | 22.1 |
| Example 2 | 100 g of tagatose | 0.198 | 26.7 | 55.5 | 13.7 |
| Comparative Example 2 | 100 g of trehalose | 0.207 | 27.6 | 70.5 | 13.7 |
| Comparative Example 5 | 100 g of sorbitol | 0.244 | 30.9 | 152.7 | 24.5 |
| Comparative Example 8 | 100 g of sugar | 0.225 | 29.6 | 148.0 | 21.4 |
| Example 5 | 50 g of sugar + 50 g of tagatose | 0.221 | 29.3 | 95.6 | 19.0 |
| Example 3 | 150 g of tagatose | 0.184 | 24.3 | 20.9 | 5.1 |
| Comparative Example 3 | 150 g of trehalose | 0.196 | 25.3 | 8.5 | 2.1 |
| Comparative Example 6 | 150 g of sorbitol | 0.223 | 30.8 | 152.3 | 25.1 |
| Comparative Example 9 | 150 g of sugar | 0.221 | 29.7 | 186.4 | 24.3 |
| Example 6 | 75 g of sugar + 75 g of tagatose | 0.210 | 27.4 | 86.6 | 16.9 |

The measurement results shown in Tables 7 to 12 and Figs. 3 to 6 show that the samples increased in hardness and decreased in springiness, cohesiveness, and chewiness overall with storage time.

Specifically, as for hardness, the rice cakes containing tagatose least increased in hardness, whereas the rice cakes containing sorbitol showed the greatest increase in hardness. It is known that hardness of starchy foods increases as amylase and amylopectin in the food are recrystallized to form a micelle. An increase in hardness is a typical indicator of retrogradation of starch and is one of determining factors affecting change in texture of a product.

As for springiness, the respective samples showed different tendencies depending on sweeteners, but all the samples decreased in springiness on the third storage day as compared with initial springiness. Specifically, the rice cakes containing tagatose least decreased in springiness, whereas the rice cakes containing sorbitol or sugar showed the greatest decrease in springiness.

As for cohesiveness, all the samples had similar decreasing tendencies, in which the rice cakes containing tagatose least decreased in cohesiveness, whereas the rice cakes containing sorbitol showed the greatest decrease in cohesiveness.

As for chewiness, the respective samples showed different variation tendencies depending on sweeteners. On the third storage day, among the rice cakes containing 150 g of the sweeteners, the rice cake containing trehalose least decreased in chewiness, followed by the rice cake containing tagatose. The rice cake containing sorbitol showed the greatest decrease in chewiness.

Overall, the rice cakes containing tagatose had an insignificant variation in texture during storage as compared with those containing the other sweeteners and thus maintained excellent initial physical properties and texture.

Experimental Example 4: Sensory evaluation of rice cake

Sensory evaluation was carried out to evaluate texture and taste for the rice cakes prepared in the examples and comparative examples. In the sensory evaluation, 15 men and women tasted five rice cake samples prepared in Example 2 (containing 100 g of tagatose), Example 5 (containing 50 g of tagatose and 50 g of sugar), Comparative Example 2 (containing 100 g of trehalose), Comparative Example 5 (containing 100 g of sorbitol), and Comparative Example 8 (containing 100 g of sugar) and rated the samples according to category.

Specifically, in a first stage of the sensory evaluation, the samplers were allowed to chew the rice cake samples with front teeth and evaluated hardness and moistness of each rice cake sample. In a second stage, the samplers were allowed to chew the samples with molars and evaluated chewiness. In a third stage, the samplers were allowed to appreciate flavor of the rice cake samples to evaluate sweetness and bitterness. Evaluation results were collected to obtain overall tastes. The samplers rated the samples on scale of 1 to 9, in which 9 represented a highest level of each physical property.

The sensory evaluation was carried out twice in total, once immediately after preparation of the rice cake samples and once after 24-hour storage of the rice cake samples.

Sensory evaluation results are shown in Table 13.

**TABLE 13**

| Sample | Sweetener | Hardness | | Moistness | | Chewiness | | Sweetness | | Bitterness | | Overall preference | |
|---|---|---|---|---|---|---|---|---|---|---|---|---|---|
| | | 0 h | 24 h | 0 h | 24 h | 0 h | 24 h | 0 h | 24 h | 0 h | 24 h | 0 h | 24 h |
| Example 2 | 100 g of tagatose | 4.73 | 5.21 | 7.67 | 6.34 | 6.33 | 7.29 | 6.07 | 6.00 | 1.87 | 1.99 | 6.13 | 5.91 |
| Example 5 | 50 g of tagatose + 50 g of sugar | 4.81 | 5.86 | 7.23 | 6.27 | 6.64 | 7.15 | 6.39 | 6.31 | 1.54 | 1.51 | 6.49 | 6.01 |
| Comparative Example 2 | 100 g of trehalose | 4.53 | 5.48 | 7.27 | 5.80 | 6.07 | 7.05 | 2.53 | 2.17 | 2.53 | 2.32 | 5.47 | 5.03 |
| Comparative Example 5 | 100 g of sorbitol | 6.93 | 8.99 | 5.93 | 3.14 | 8.00 | 9.31 | 3.47 | 2.39 | 2.60 | 3.26 | 4.40 | 3.19 |
| Comparative Example 8 | 100g of sugar | 6.27 | 8.34 | 5.67 | 3.39 | 7.20 | 8.36 | 6.47 | 6.39 | 2.07 | 2.49 | 6.67 | 5.84 |

The sensory evaluation results shown in Table 13 show that, as for hardness and moistness, the rice cakes containing tagatose or trehalose had soft and moist texture as compared with the other rice cakes. In addition, the rice cake containing tagatose least increased in hardness after 24-hour storage.

Chewiness exhibited similar evaluation results to those of hardness overall, and sweetness and bitterness showed a similar tendency to that of sweetening levels of the respective sweeteners used for the rice cake samples.

According to the results, the rice cake containing trehalose was evaluated to have excellent hardness, moistness, and chewiness in similar levels to those of the rice cake containing tagatose but obtained an unsatisfactory result in sweetness and bitterness due to a considerably low sweetening level. Consequently, the rice cake containing trehalose received a substantially low evaluation in overall preference as compared with the rice cake containing tagatose.

According to the sensory evaluation, the rice cake containing tagatose of the present invention had excellent texture and preference immediately after preparation and involved an insignificant quality change during storage, as compared with use of other sweeteners, thereby providing superior texture and preference over storage time. This is considered attributable to tagatose which, with excellent water retention, suppressed a change in moisture of the rice cake and retrogradation of starch during storage, contributing to maintaining quality of the rice cake. In addition, it is expected that a rice cake will be prepared with a suppressed change in texture, such as hardness and moistness, an improved sweetening level, and a higher preference by using appropriately adjusted amounts of tagatose and sugar together.

## Claims

1. A method of preparing a rice cake containing tagatose, comprising:

   mixing and kneading 100 parts by weight of rice flour, 0.1 to 10 parts by weight of salt, 30 to 70 parts by weight of water, and 1 to 20 parts by weight of tagatose to form a dough; and
   heating and molding the dough.

2. The method according to claim 1, wherein the mixing and kneading comprises:

   subjecting the rice flour, salt, and water to primary mixing and filtering with a sieve; and
   adding the tagatose to a filtered primary mixture, followed by subjecting the mixture to secondary mixing and kneading.

3. The method according to claim 1, further comprising adding 0.1 to 30 parts by weight of sugar in the mixing and kneading step.

4. The method according to claim 1, further comprising adding at least one sweetener selected from the group consisting of glucose, fructose, lactose, oligosaccharide, maltose, xylose, erythritol, indigestible maltodextrin, honey, and steviol glycosides in the mixing and kneading step.

5. The method according to claim 4, wherein the sweetener is added in an amount of 0.1 to 30 parts by weight.

## Patentansprüche

1. Verfahren zum Herstellen eines tagatosehaltigen Reiskuchens, umfassend:

   Mischen und Kneten von 100 Gewichtsanteilen Reismehl, 0,1 bis 10 Gewichtsanteilen Salz, 30 bis 70 Gewichtsanteilen Wasser und 1 bis 20 Gewichtsanteilen Tagatose, um einen Teig zu bilden und
   Erwärmen und Formen des Teiges.

2. Verfahren nach Anspruch 1, wobei das Mischen und Kneten umfasst:

   Unterziehen des Reismehls, des Salzes und des Wassers einem ersten Mischen und Filtern mit einem Sieb und
   Hinzufügen der Tagatose zu der gefilterten ersten Mischung, gefolgt von Unterziehen der Mischung einem zweiten Mischen und Kneten.

3. Verfahren nach Anspruch 1, ferner umfassend Hinzufügen von 0,1 bis 30 Gewichtsanteilen Zucker in dem Misch- und Knetschritt.

**4.** Verfahren nach Anspruch 1, ferner umfassend Hinzufügen wenigstens eines Süßungsmittels, das aus der aus Glucose, Fructose, Lactose, Oligosaccharid, Maltose, Xylose, Erythritol, unverdaulichem Maltodextrin, Honig und Steviaglycosiden bestehenden Gruppe ausgewählt ist, in dem Misch- und Knetschritt.

**5.** Verfahren nach Anspruch 4, wobei das Süßungsmittel in einer Menge von 0,1 bis 30 Gewichtsanteilen hinzugefügt wird.

**Revendications**

**1.** Procédé de préparation d'un gâteau de riz contenant du tagatose, comprenant :

le mélange et malaxage de 100 parties en masse de farine de riz, de 0,1 à 10 parties en masse de sel, de 30 à 70 parties en masse d'eau, et de 1 à 20 parties en masse de tagatose pour former une pâte ; et le chauffage et le moulage de la pâte.

**2.** Procédé selon la revendication 1, dans lequel le mélange et malaxage consiste :

à soumettre la farine de riz, le sel et l'eau à un premier mélange et une filtration avec un tamis ; et à ajouter le tagatose au premier mélange filtré, puis à soumettre le mélange à un second mélange et malaxage.

**3.** Procédé selon la revendication 1, comprenant de plus l'addition de 0,1 à 30 parties en masse de sucre dans l'étape de mélange et malaxage.

**4.** Procédé selon la revendication 1, comprenant de plus l'addition d'au moins un édulcorant choisi dans le groupe constitué de glucose, fructose, lactose, oligosaccharide, maltose, xylose, érythritol, maltodextrine indigestible, miel, et glucosides de stéviol dans l'étape de mélange et malaxage.

**5.** Procédé selon la revendication 4, dans lequel l'édulcorant est ajouté dans une quantité de 0,1 à 30 parties en masse.

FIG.1

FIG.2

FIG.3

**FIG.4**

FIG.5

**FIG.6**

**EP 2 936 998 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100377212
- KR 1020120037819
- KR 20110117814